# EUROPÄISCHE PATENTSCHRIFT

(11) **EP 2 577 011 B1**
(45) Veröffentlichungstag und Bekanntmachung des Hinweises auf die Patenterteilung: **08.07.2015**
(21) Anmeldenummer: 11720443.8
(22) Anmeldetag: 13.05.2011
(51) Int. Cl.: F01N 3/20

(54) **VENTILANORDNUNG ZUR DOSIERUNG EINES FLUIDEN MEDIUMS IN EINEN ABGASSTRANG EINER BRENNKRAFTMASCHINE**
VALVE ARRANGEMENT FOR METERING A FLUID MEDIUM IN AN EXHAUST LINE OF AN INTERNAL COMBUSTION ENGINE
ENSEMBLE SOUPAPE DESTINÉ AU DOSAGE D'UN AGENT FLUIDE DANS UNE LIGNE D'ÉCHAPPEMENT D'UN MOTEUR À COMBUSTION INTERNE

(30) Priorität: 26.05.2010 DE 102010029298
(43) Veröffentlichungstag der Anmeldung: 10.04.2013
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2011/057793
(87) Internationale Veröffentlichungsnummer: WO 2011/147698

(56) Entgegenhaltungen:
- EP-A1- 1 857 665
- WO-A1-2010/149411
- DE-A1-102007 031 817
- DE-A1-102008 055 190

## Beschreibung

Die Erfindung betrifft eine Ventilanordnung zur Dosierung eines fluiden Mediums, insbesondere einer wässrigen Harnstofflösung, in einen Abgasstrang einer Brennkraftmaschine, insbesondere eines Dieselmotors.

### Stand der Technik

Im Abgas moderner Brennkraftmaschinen sind eine Reihe umweltschädlicher Komponenten, insbesondere Stickoxide (NOx), enthalten. Zur Reduktion der Stickoxide im Abgas wird dieses häufig im Abgasstrang der Brennkraftmaschine nachbehandelt. Eine Methode, die Anwendung bei der Nachbehandlung des Abgases findet, ist das SCR - Verfahren (selective catalytic reduction), bei welchem ein Reduktionsmittel, in der Regel eine wässrige Harnstofflösung, in den Abgasstrang eingespritzt wird, wodurch die Stickoxide (NOx) zu Stickstoff (N2) und Wasserdampf (H2O) reduziert werden. Dadurch ist es möglich, den Ausstoß von Stickoxiden im Abgas von Brennkraftmaschinen um etwa 90 % zu reduzieren. Wässrige Harnstofflösung, zum Beispiel eine als AdBlue bekannte wässrige Lösung aus 32,5-prozentigem hochreinem Harnstoff in demineralisiertem Wasser, stellt dabei eine umweltschonende Chemikalie zur Abgasreinigung dar.

Üblicherweise wird das Reduktionsmittel zur Nachbehandlung des Abgases in einem Tank gelagert und über ein Dosierventil unter Druck in den Abgasstrang der Brennkraftmaschine eingeleitet. Ein solches Dosierventil beinhaltet im Allgemeinen eine Lochscheibe, über welche das unter Druck stehende Reduktionsmittel in den Abgasstrahl eingespritzt wird.

Ein solches Ventil ist aus der DE 10 2007 043 532 A1 bekannt, in welcher eine Ventilanordnung zur Dosierung eines fluiden, insbesondere schadstoffreduzierenden Mediums, in den Abgasstrang eines Kraftfahrzeug-Abgassystems beschrieben ist. Die Ventilanordnung umfasst einen Fluideinlass, einen Austrittsbereich und einen beweglich gelagerten Schließkörper, welcher mit einem an einem Haltekörper ausgebildeten Ventilsitz zum Verschließen des Austrittsbereichs zusammenwirkt, wobei bei geöffnetem Austrittsbereich das Medium vom Fluideinlass zum Austrittsbereich strömen kann. Des Weiteren befindet sich in dem Aüstrittsbereich eine Spritzlochscheibe, welche an dem Haltekörper befestigt ist. Das Ventil wird in einen am Abgasstrang vorgesehenen Adapter eingesetzt und mittels einer entsprechenden O-Ring-Dichtung abgedichtet.

Aus dem Stand der Technik bekannte Ventile, welche eine Spritzlochscheibe aufweisen, durch welche ein Reduktionsmittel einem Abgasstrang einer Brennkraftmaschine zugeführt werden kann, sind in der Herstellung und Montage aufwändig. Beispielsweise sind bislang separate Dichtelemente zwischen dem Ventil und dem Abgasstrang erforderlich. Ferner ist bei bekannten Ventilen der Wärmeeintrag aus dem Abgas in das Ventil hoch.

### Offenbarung der Erfindung

Der vorliegenden Erfindung liegt daher die Aufgabe zugrunde, eine Ventilanordnung zur Einleitung eines fluiden Mediums in einen Abgasstrang bereitzustellen, welche im Vergleich zu bekannten Ventilen einfacher herstellbar und montierbar ist, aber dennoch eine zuverlässige fluiddichte Verbindung zwischen Ventil und Abgasstrang gewährleistet.

Die Aufgabe der Erfindung wird durch eine Ventilanordnung zur Dosierung eines fluiden Mediums in einen Abgasstrang gemäß dem unabhängigen Anspruch 1 gelöst. Vorteilhafte Weiterbildungen ergeben sich aus den abhängigen Ansprüchen.

Eine erfindungsgemäße Ventilanordnung zur Dosierung eines fluiden Mediums in einen Abgasstrang umfasst einen mit einem Schließkörper zusammenwirkenden Ventilsitz, in welchem ein Ventildurchgang ausgebildet ist, sowie eine stromabwärts des Ventilsitzes angeordnete und den Ventildurchgang abschließende Lochscheibe, welche im Bereich des Ventildurchgangs wenigstens ein axiales Loch aufweist, durch welches das fluide Medium in den Abgasstrang einspritzbar ist. Des Weiteren weist die Ventilanordnung einen Anschlussflansch zum fluiddichten Anschließen der Ventilanordnung an den Abgasstrang auf, wobei die Lochscheibe sich von dem Ventildurchgang bis zum Anschlussflansch erstreckt und derart ausgebildet ist, dass sie im Einbauzustand den Anschlussflansch fluiddicht gegenüber dem Abgasstrang abdichtet. Auf eine separate Dichtung kann somit verzichtet werden, weil die Lochscheibe die Dichtfunktion übernimmt.

Das fluide Medium kann dabei zum Beispiel aus einer wässrigen Harnstofflösung bestehen, welche zur Nachbehandlung von Abgasen zum Einsatz kommt. Beispielsweise wird häufig eine als AdBlue bekannte Lösung mit einem 32,5-prozentigen Anteil hochreinen Harnstoffs in demineralisiertem Wasser verwendet.

Gegenüber bisher bekannten Ventilanordnungen zur Dosierung eines fluiden Mediums in einen Abgasstrang ergibt sich des Weiteren der Vorteil, dass die stromabwärts des Ventilsitzes angeordnete Lochscheibe nicht nur für eine fluiddichte Abdichtung des Ventils gegenüber dem Abgasstrang sorgt, sondern zusätzlich noch die Ventilanordnung in radialer Richtung fixiert. Die Lochscheibe ist an einem den Ventildurchgang aufweisenden Haltekörper bebefestigt und erreicht damit die radiale Fixierung dadurch, dass sie sich von dem Ventildurchgang bis zum Anschlussflansch erstreckt und dort im Einbauzustand zwischen dem Anschlussflansch und dem Abgasstrang festgepresst wird. Die Lochscheibe stellt eine Verbindung zwischen dem Abgasstrang und der Ventilanordnung dar und verhindert durch die beschriebene Befestigung eine radiale Bewegung der Ventilanordnung relativ zum Abgasstrang. Die Befestigung zwischen dem Anschlussflansch und dem Abgasstrang kann beispielsweise durch eine axiale Verpressung realisiert werden, welche beispielsweise durch eine Schraubverbindung ausgeführt wird.

In einer Ausführungsform kann die Lochscheibe verformbar sein und sich so im Einbauzustand unter der Aufprägung von Anpresskräften an den Abgasstrang bzw. den Anschlussflansch anpassen. Die Verformung der Lochscheibe im Einbauzustand kann im Wesentlichen plastisch sein. Die Verformung der Lochscheibe kann im Einbauzustand kann aber auch weitestgehend elastisch sein, sodass die Lochscheibe nach Demontage ihre ursprüngliche Form wieder annimmt.

Durch das Schalten der Ventilanordnung entstehen Geräusche und Vibrationen, die von der Ventilanordnung auf den Abgasstrang übertragen werden können. Wenn eine gut verformbare Lochscheibe verwendet wird, ergibt sich der Vorteil, dass kein oder nur ein geringer Impuls von der Lochscheibe auf den Abgasstrang übertragen werden kann, da die biegeweiche Lochscheibe eine Impulsübertragung dämpft. Dies trägt maßgeblich dazu bei, von der Ventilanordnung verursachte Schaltgeräusche und Vibrationen besser zu unterdrücken.

In einer Ausführungsform ist die Lochscheibe als dünne Platte ausgebildet mit einer Wandstärke, welche kleiner als 0,3mm ist und insbesondere in einem Bereich von 0,1mm bis 0,3mm liegt.

Eine geringe Wandstärke der Lochscheibe sorgt dabei für eine gute Verformbarkeit und stellt gleichzeitig sicher, dass sich im Betrieb ein nur geringer Wärmefluss von dem Abgasstrang zum Ventil einstellt. Damit erwärmt sich die Ventilanordnung im Betrieb weniger stark.

Gemäß einer weiteren Ausgestaltung der Erfindung kann die Lochscheibe aus einem metallischen Material, gefertigt sein, welches insbesondere eine hohe Verformbarkeit und eine geringe Wärmeleitfähigkeit bei einer kleinen Wandstärke aufweist. Es hat sich herausgestellt, dass Lochscheiben aus Metall gut geeignet sind.

Ferner kann die Lochscheibe, gemäß einer Ausgestaltung der Erfindung, mindestens eine Einschnürung aufweisen. Im Bereich einer Einschnürung ist die Wandstärke geringer ist als in den angrenzenden Bereichen der Lochscheibe. Eine derartige lokale Einschnürung in der Lochscheibe kann dabei beispielsweise ringförmig ausgeführt sein, wobei sie den Ventildurchgang umschließt. Ggf. sind auch wenigstens teilweise radial verlaufende Einschnürungen denkbar.

Eine solche Einschnürung verringert den Wärmefluss von dem Abgasstrang in die Ventilanordnung und stellt daher eine zusätzliche Wärmebremse dar. Des Weiteren weist das Material an den Stellen geringerer Wandstärke eine geringere Biegesteifigkeit auf und die Lochscheibe erfährt dadurch eine höhere Verformbarkeit.

Eine weitere Ausführungsform umfasst eine Ventilanordnung, bei welcher die Lochscheibe in einem im Einbauzustand zwischen der Lochscheibe und dem Anschlussflansch liegenden Bereich wenigstens eine Sicke aufweist, welche im Einbauzustand eine fluiddichte Verbindung zwischen dem Anschlussflansch und dem Abgasstrang herstellt. Die Sicke verläuft vorteilhafterweise um den Ventildurchgang herum, zum Beispiel ringförmig.

Durch ein axiales Verpressen des Anschlussflansches mit dem Abgasstrang, beispielsweise durch eine Schraubverbindung, tritt eine Verformung des biegeweichen Materials an der Stelle der Sicke auf. Dadurch wird der Bereich zwischen dem Anschlussflansch und dem Abgasstrang fluiddicht abgedichtet und ein Austreten des fluiden Mediums oder des Abgases aus der Ventilanordnung bzw. dem Abgasstrang in die Umgebung wird verhindert.

Das Aufprägen einer solchen Sicke auf die Lochscheibe führt in einer zuverlässig abdichtenden Struktur und hat den Vorteil, dass nicht auf ein zusätzliches Dichtelement, wie beispielsweise einen Kunststoffdichtring, zwischen der Ventilanordnung und dem Abgasstrang zurückgegriffen werden muss. Vorteilhafterweise sind in dem Bereich der Sicke keine Einschnürungen in der Wandstärke der Lochscheibe vorhanden.

Des Weiteren wird durch die auf die Lochscheibe aufgeprägte Sicke der Wärmeeintrag von dem Abgasstrang an den Anschlussflansch minimiert, da die Verbindung zwischen dem Abgasstrang und dem Anschlussflansch über die Lochscheibe erfolgt und in dem Bereich der Sicke eine geringere Berührungsfläche der Komponenten vorhanden ist. Die Berührungsfläche kann insbesondere näherungsweise rillen-förmig sein, und eine Dichtung in der Art einer sogenannten "Metallosealdichtung" bilden.

Ferner beinhaltet eine weitere Ausführungsform der Ventilanordnung einen stationären Haltekörper, der mit dem Schließkörper zusammenwirkt und an dem der Ventilsitz ausgebildet ist. Die Lochscheibe kann dann an dem stationären Haltekörper angebracht sein, insbesondere angeschweißt sein.

Durch die Befestigung der Lochscheibe an dem stationären Haltekörper wird die Ventilanordnung an dem Abgasstrang fixiert, weil die Lochscheibe einerseits zwischen dem Anschlussflansch und dem Abgasstrang verpresst und andererseits an dem stationären Haltekörper befestigt ist.

Weiterhin kann die Ventilanordnung ein Gehäuse umfassen, welches mindestens teilweise den Ventilsitz und den Schließkörper umschließt und mit dem Ventilsitz fest verbunden ist, wobei der Anschlussflansch über eine, vorzugsweise u-förmige, Federscheibe derart an dem Gehäuse befestigt ist, dass die Ventilanordnung im Einbauzustand axial am Abgasstrang fixiert ist.

Zusätzlich zu der beschrieben Fixierung des Ventils über die Lochscheibe, kann die Ventilanordnung über das Gehäuse, welches mit dem Anschlussflansch in Verbindung steht, in axialer Richtung fest eingespannt werden. Das hat den Vorteil, dass durch eine weitere Einspannung der Ventilanordnung die axiale und radiale Fixierung des Ventils auf dem Abgasstrang voneinander getrennt sind.

Die axiale Fixierung des Ventils braucht dann nicht ausschließlich über die Lochscheibe bzw. dem Anschlussflansch stattzufinden, sondern kann zusätzlich über eine zweite Einspannung des Ventils am Gehäuse über die Federscheibe in axialem Abstand vom Anschlussflansch erfolgen. Da die Lochscheibe wegen ihrer dünnen Wandstärke in axialer Richtung verformbar ist, ist es günstig wenn diese Verbindung keine feste Einspannung der Ventilanordnung am Abgasstrang in axialer Richtung vermitteln muss. Außerdem wird durch die Flexibilität der Lochscheibe eine statische Überbestimmtheit des Ventils hinsichtlich der zweiten Einspannung verhindert, welche unzulässige Verformungen an der Ventilanordnung hervorrufen könnte. Die Verformbarkeit der Lochscheibe ist lediglich in axialer Richtung möglich. In radialer Richtung kann keine Verformung der Lochscheibe stattfinden, wodurch das Ventil an dem Abgasstrang radial fixiert ist.

Eine weitere Ausführungsform beinhaltet wenigstens einen in Axialrichtung verlaufenden Steg, welcher den Anschlussflansch und die Federscheibe verbindet.

Der Steg und /oder die Federscheibe können elastisch ausgeführt sein, um eine Impulsübertragung von dem Ventil auf den Abgasstrang möglichst zu unterdrücken.

Eine Unterdrückung der Impulsübertragung von dem Ventil auf den Abgasstrang vermeidet zum einen eine Geräuschbildung in dem Abgasstrang und zum anderen wird eine Belastung des Abgasstrangs durch Vibrationen, welche durch das Schalten des Ventils ausgelöst werden, unterbunden.

Des Weiteren kann der Steg mit mehreren in radialer Richtung verlaufenden Öffnungen versehen sein. Vorteilhafterweise haben die Öffnungen einen Durchmesser von 2-4mm und sind alternierend oder in unregelmäßigen Abständen zueinander in dem Steg angeordnet.

Durch einen mit Öffnungen versehen bzw. perforierten Steg wird die Wärmeübertragung von dem Steg auf die Federscheibe und somit auf das Gehäuse reduziert. Ferner wird durch einen derartigen Steg dessen Schallabstrahlung vermindert. Durch das Schalten des Ventils entstehen Impulse, die über den Steg übertragen werden. Bei einem mit Öffnungen versehenen Steg wird die Ausbreitung der Schallwellen in dem Steg gebremst, da diese sich um die Öffnungen herum ausbreiten müssen und so abgeschwächt werden.

Zusätzlich wird durch einen perforierten Steg erreicht, dass aus der Umgebung in die Ventilanordnung eindringbare Flüssigkeit, insbesondere Wasser, über die Öffnungen abgeleitet werden kann. Da die Flüssigkeit meist von oben in die Ventilanordnung eintritt, sammelt sich diese zwischen dem Gehäuse und dem Steg. Bei einem mit Öffnungen versehenen Steg kann in die Ventilanordnung eingedrungene Flüssigkeit einfach wieder austreten und eine Materialbeschädigung durch die Flüssigkeit, wie zum Beispiel Rost, wird vermindert.

Die Erfindung ist nachfolgend anhand eines Ausführungsbeispiels mit Bezug auf die beiliegende Figur näher erläutert.

Die Figur zeigt eine schematische Darstellung einer Ventilanordnung zur Dosierung eines fluiden Mediums in einen Abgasstrang gemäß einem Ausführungsbeispiel der Erfindung.

Die in der Figur dargestellte Ventilanordnung 2 zur Dosierung eines fluiden Mediums in einen Abgasstrang 22 weist einen Fluideintrittsbereich und einen Fluidaustrittsbereich auf, der im Einbauzustand der Ventilanordnung 2 dem Abgasstrang 22 benachbart ist. Im Fluidaustrittsbereich ist ein Haltekörper 4 vorgesehen, der einen Ventilsitz 10 und einen um eine Ventilachse A herum ausgebildeten Ventildurchgang 14 bildet. Der Ventilsitz 10 ist derart in der Ventilanordnung 2 angeordnet, dass er mit einem Schließkörper 12 zusammenwirkt, welcher in axialer Richtung beweglich gelagert ist, und durch eine axiale Bewegung den Ventildurchgang 14 verschließen oder öffnen kann.

Des Weiteren beinhaltet die Ventilanordnung 2 ein den Haltekörper 4 und den Schließkörper 12 umschließendes Gehäuse 24. Das Gehäuse 24 ist vorteilhafterweise mit dem Haltekörper 4 fest verbunden, insbesondere verschweißt 32, wie in der Figur durch eine radial umlaufende Schweißverbindung 32 angedeutet ist.

Der Schließkörper 12 ist dabei vorzugsweise an einem mit dem Ventilsitz 10 zusammenwirkenden Ende kugelförmig ausgebildet und über einen länglichen Führungskörper in dem Ventilgehäuse 24 axial beweglich geführt. Der Führungskörper kann über eine nicht gezeigte Feder am Ventilgehäuse 24 abgestützt sein.

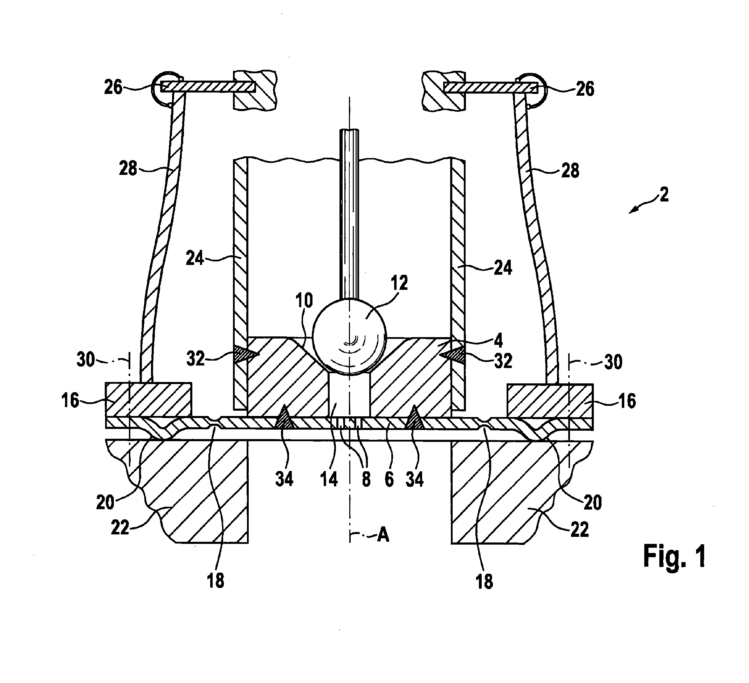

Am stromabwärtigen Ende des Ventildurchgangs 14 ist eine Lochscheibe 6 angeordnet. In der Lochscheibe 6 ist mindestens ein in Axialrichtung verlaufendes Loch 8 angeordnet, durch welches das fluide Medium in den Abgasstrang 22 einspritzbar ist. Die Lochscheibe 6 ist an dem Haltekörper 4 angebracht. Wie in Fig. 1 angedeutet ist, kann die Lochscheibe 6 am Haltekörper 4 angeschweißt sein, zum Beispiel durch eine um den Ventildurchgang 14 umlaufende Schweißverbindung 32 an der dem Abgasstrang 22 zugewandte Stirnende des Haltekörpers 4.

Vorzugsweise sind in der Lochscheibe 6, zumindest in einem im Einbauzustand den Ventildurchgang 14 abschließenden Bereich, eine Mehrzahl von axialen Löchern 8 angeordnet, um eine feine Zerstäubung des fluiden Mediums beim Einspritzen in den Abgasstrang 22 zu erreichen.

Die in der Figur dargestellte Ventilanordnung 2 umfasst außerdem einen Anschlussflansch 16, welcher der Befestigung der Ventilanordnung 2 an einem Abgasstrang 22 (zum Beispiel an einem am Abgasstrang ausgebildeten Adapter) dient und über welchen ein Anschließen der Ventilanordnung 2 an den Abgasstrang 22 ermöglicht wird. Der Anschlussflansch umgibt das Ventilgehäuse 24 ringförmig, ist aber nicht unmittelbar am Ventilgehäuse 24 befestigt.

Die Lochscheibe 6 ist in radialer Richtung erweitert und erstreckt sich von dem Ventildurchgang bis zu Anschlussflansch 16. Dabei bildet die Lochscheibe 6 eine Dichtung zwischen dem Anschlussflansch 16 und dem Abgasstrang 22, indem die Lochplatte 6 zwischen dem Anschlussflansch 16 und dem Abgasstrang 22 in axialer Richtung verpresst wird. Eine solche Verpressung kann beispielsweise durch eine Schraubverbindung 30 realisiert werden. Durch die Anordnung der Lochscheibe an dem Bereich, der sich von dem Ventildurchgang 14 bis zum Anschlussflansch 16 erstreckt, kann auf ein zusätzliches Dichtelement, wie zum Beispiel ein Kunststoffdichtring, zwischen dem Anschlussflansch 16 und dem Abgasstrang 22 verzichtet werden.

Zusätzlich ist die Ventilanordnung 2 durch die Befestigung der Lochscheibe 6 an dem stationären Haltekörper 4 und die Klemmung der Lochscheibe 6 zwischen dem Anschlussflansch 16 und dem Abgasstrang 22 radial fixiert.

Die Lochscheibe 6 kann aus einem verformbaren Material, beispielsweise einem biegsamen Metall, bestehen und dabei im Einbauzustand entweder elastisch oder plastisch verformbar sein. Die Verformung der Lochscheibe 6 ist dabei hauptsächlich in axialer Richtung möglich. In radialer Richtung verformt sich die Lochscheibe 6 nicht oder nur minimal, und trägt so zu einer guten radiale Fixierung der Ventilanordnung 2 an dem Abgasstrang 22 bei.

Die Ventilanordnung 2 umfasst ferner einen in Axialrichtung verlaufenden Steg 28, der an dem Anschlussflansch 16 befestigt ist und parallel zum Ventilgehäuse 24 ausgerichtet ist. Über eine an dem Ventilgehäuse 24 abgestützte Federscheibe 26 ist der Steg 28 mit dem Ventilgehäuse 24 verbunden. Steg 28 und Federscheibe 26 dienen dem Abstützen des Anschlussflansches 16 an dem Ventilgehäuse 24 in axialer Richtung und damit der axialen Fixierung der Ventilanordnung 2. Wie in der Figur angedeutet liegt der Anlagebereich der Federscheibe 26 am Gehäuse 24 vorzugsweise in der Nähe des Fluideintrittsbereichs der Anordnung 2.

Es ist außerdem denkbar, auf den axialen Steg 28 zu verzichten und den Anschlussflansch 16 direkt mit dem Ventilgehäuse 24 zu verbinden, insbesondere zu verschweißen.

Die Ventilanordnung 2 ist in zweierlei Hinsicht in axialer Richtung fixiert: Zum Einen ist die Ventilanordnung 2 über den Anschlussflansch 16, über den Steg 28 und die Federscheibe 26 am Fluideintittsbereich axial fixiert. Zum Anderen ist die Ventilanordnung 2 über den Anschlussflansch 16, die Lochscheibe 6 und den Haltekörper 4 in axialer Richtung fixiert. Daher ist es günstig die axiale Befestigung der Ventilanordnung 2 über die Lochscheibe 6 so beweglich wie möglich auszuführen, um eine statische Überbestimmtheit der Ventilanordnung 2 und daraus resultierende Spannungen zu vermeiden. Die bewegliche axiale Fixierung der Ventilanordnung 2 kann durch Verwendung einer gut verformbaren Lochscheibe 6 erreicht werden.

Der Steg 28 und die Federscheibe 26 bestehen dabei vorteilhafterweise aus einem elastischen Material, wodurch eine Impulsübertragung von dem Ventil auf den Abgasstrang 22 verhindert wird.

Eine flexible Auslegung der Verbindung zwischen der Ventilanordnung 2 und dem Abgasstrang 22 bietet den Vorteil, dass die von der Ventilanordnung 2 erzeugten Geräusche und Vibrationen, die durch das Schalten der Ventilanordnung bedingt sind, nicht auf den Abgasstrang 22 übertragen werden können und somit die Geräusche beim Einspritzen eines fluiden Mediums in den Abgasstrang 22 minimiert werden können. Die von der Ventilanordnung erzeugten Impulse werden weitestgehend von der flexiblen Ferderscheibe 26 und dem flexiblen Steg 28 aufgefangen und nicht auf den Abgasstrang 22 übertragen.

Der Steg 28 kann mit mehreren in radialer Richtung verlaufenden Öffnungen versehen bzw. perforiert sein. Vorteilhafterweise haben die Öffnungen einen Durchmesser von 2-4mm und sind versetzt oder in unregelmäßigen Abständen zueinander in dem Steg 28 angeordnet. Durch einen mit Öffnungen versehen Steg wird die Wärmeübertragung von dem Steg 28 auf die Federscheibe 26 und somit auf das Ventilgehäuse 24 reduziert. Zusätzlich bietet ein perforierter Steg 28 den Vorteil, dass die Schallabstrahlung des Stegs 28 vermindert wird. Durch das Schalten des Ventils entstehen Impulse, die über den Steg 28 auf den Abgasstrang 22 übertragen werden. Bei einem perforierten Steg 28 wird die Ausbreitung der Schallwellen innerhalb des Stegs 28 gebremst, da diese sich um die Öffnungen herum ausbreiten müssen und so abgeschwächt werden.

Darüber hinaus bewirken die in dem Steg angeordneten Löcher ein besseres Abfließen von Flüssigkeit, insbesondere Wasser, welche aus der Umgebung in die Ventilanordnung eintreten kann. Da Flüssigkeit meist von oben in die Ventilanordnung eintritt, sammelt sie sich zwischen dem Gehäuse und dem Steg. Bei einem mit Öffnungen versehenen Steg kann in die Ventilanordnung eingedrungene Flüssigkeit einfach wieder abfließen und eine Materialbeschädigung durch die Flüssigkeit, wie zum Beispiel Rost, wird vermindert.

Die Lochscheibe 6 weist zumindest eine Einschnürung 18 auf. Im Bereich der Einschnürung weist die Lochscheibe 6 eine geringere Wandstärke auf als in den daran angrenzenden Bereichen der Lochscheibe 6. Vorzugsweise sind eine Mehrzahl von Einschnürungen 18 in der Lochscheibe 6 ausgebildet, wobei diese beispielsweise radial oder in Umfangsrichtung verlaufen können. Die Einschnürung 18 bewirkt eine Verringerung der Biegesteifigkeit der Lochscheibe 6 gegenüber in axialer Richtung wirkenden Kräften. Zusätzlich hat die Einschnürung 18 die Funktion einer Wärmebremse und verringert den Wärmefluss von dem Abgasstrang 22 in die Ventilanordnung 2.

Ferner ist die Lochscheibe 6 mit einer Sicke 20 versehen, welche in einem Anpressbereich angeordnet ist, der sich im Einbauzustand zwischen dem Anschlussflansch 16 und dem Abgasstrang 22 befindet. Die Sicke 20 kann beispielsweise in Umfangsrichtung durchgehend oder abschnittsweise in der Lochscheibe 6 verlaufen.

Im Einbauzustand wird die Sicke 20 zwischen dem Anschlussflansch 16 und dem Abgasstrang axial verpresst und dadurch verformt. Durch die Verformung der Lochscheibe 6 in dem Bereich der Sicke 20, passt sich diese optimal an die anliegenden Flächen des Anschlussflansches 16 und des Abgasstrangs 22 an, wodurch eine fluiddichte Verbindung zwischen dem Abgasstrang 22 und der Ventilanordnung 2 hergestellt wird. Eine solche Dichtung ist auch als Metallosealdichtung bekannt.

Durch die auf die Lochscheibe aufgeprägte Sicke 20 wird der Wärmeeintrag von dem Abgasstrang 22 an den Anschlussflansch 16 minimiert, da die Verbindung zwischen dem Abgasstrang 22 und dem Anschlussflansch 16 über die Lochscheibe erfolgt und in dem Bereich der Sicke 20 eine geringere Berührungsfläche der Komponenten vorhanden ist. Die Berührungsfläche zwischen Sicke und dem Anschlussflansch 16 auf der einen Seite und dem Abgasstrang 22 auf der anderen Seite der Lochscheibe 6, kann vorzugsweise rillen-förmig ausgebildet sein.

Die Lochscheibe 6 weist eine geringe Wandstärke auf, welche vorzugsweise kleiner als 0,3 mm ist und insbesondere in einem Bereich von 0,1 bis 0,3 mm liegt. Durch eine geringe Wandstärke der Lochscheibe 6 wird die Biegesteifigkeit der Lochscheibe 6 verringert und diese ist leichter verformbar.

In einem sich im Einbauzustand zwischen dem Anschlussflansch 16 und dem Abgasstrang 22 befindlichen Bereich der Lochscheibe 6 sind vorzugsweise keine

Löcher 8 ausgebildet, um eine fluiddichte Abdichtung des Ventils gegenüber dem Abgasstrang 22 zu gewährleisten.

## Patentansprüche

1. Ventilanordnung (2) zur Dosierung eines fluiden Mediums in einen Abgasstrang (22) einer Brennkraftmaschine, umfassend:
einen mit einem Schließkörper (12) zusammenwirkenden Ventilsitz (10), in welchem ein Ventildurchgang (14) ausgebildet ist;
eine stromabwärts des Ventilsitzes (10) angeordnete und den Ventildurchgang (14) abschließende Lochscheibe (6), welche im Bereich des Ventildurchgangs (14) wenigstens ein axiales Loch (8) aufweist, durch welches das fluide Medium in den Abgasstrang (22) einspritzbar ist, wobei die Lochscheibe (6) an einem stationären Haltekörper (4), an welchem der Ventilsitz (10) ausgebildet ist, angebracht, insbesondere angeschweißt, ist, **dadurch gekennzeichnet, dass** die Ventilanordnung (2)
einen Anschlussflansch (16) zum fluiddichten Anschließen der Ventilanordnung (2) an den Abgasstrang (22) umfasst,
wobei die Lochscheibe (6) sich von dem Ventildurchgang (14) bis zum Anschlussflansch (16) erstreckt und derart ausgebildet ist, dass sie im Einbauzustand den Anschlussflansch (16) fluiddicht gegenüber dem Abgasstrang (22) abdichtet.

2. Ventilanordnung nach einem der vorangehenden Ansprüche, wobei die Lochscheibe (6) verformbar ist.

3. Ventilanordnung nach einem der vorangehenden Ansprüche, wobei die Lochscheibe (6) eine Wandstärke kleiner als 0.3 mm, insbesondere eine Wandstärke in dem Bereich von 0,1 mm bis 0,3 mm, aufweist.

4. Ventilanordnung nach einem der vorangehenden Ansprüche, wobei die Lochscheibe (6) aus einem metallischen Material ausgebildet ist.

5. Ventilanordnung nach einem der vorangehenden Ansprüche, wobei die Lochscheibe (6) wenigstens eine Einschnürung (18) aufweist.

6. Ventilanordnung nach einem der vorangehenden Ansprüche, wobei die Lochscheibe (6) in einem im Einbauzustand zwischen der Lochscheibe (6) und dem Anschlussflansch (16) liegenden Bereich wenigstens eine Sicke (20) aufweist, welche im Einbauzustand eine fluiddichte Verbindung zwischen dem Anschlussflansch (16) und dem Abgasstrang (22) herstellt.

7. Ventilanordnung nach einem der vorangehenden Ansprüche, ferner aufweisend ein Gehäuse (24), welches mindestens teilweise den Ventilsitz (10) und den Schließkörper (12) umschließt und mit dem Ventilsitz (10) fest verbunden ist, wobei der Anschlussflansch (16) über eine, vorzugsweise u-förmige, Federscheibe (26) derart an dem Gehäuse (24) befestigt ist, dass die Ventilanordnung (2) im Einbauzustand axial am Abgasstrang (22) fixiert ist.

8. Ventilanordnung nach einem der vorangehenden Ansprüche, ferner aufweisend wenigstens einen in Axialrichtung verlaufenden Steg (28), welcher den Anschlussflansch (16) und die Federscheibe (26) verbindet.

9. Ventilanordnung nach einem der vorangehenden Ansprüche, wobei der Steg (28) und /oder die Federscheibe (26) elastisch sind, um eine Impulsübertragung von dem Ventil auf den Abgasstrang (22) zu verhindern.

## Claims

1. Valve arrangement (2) for dosing a fluid medium into an exhaust line (22) of an internal combustion engine, comprising:
a valve seat (10) which interacts with a closing body (12) and in which a valve passage (14) is formed;
a perforated disk (6) which is arranged downstream of the valve seat (10) and which closes off the valve passage (14) and which, in the region of the valve passage (14), has at least one axial hole (8) through which the fluid medium can be injected into the exhaust line (22), wherein the perforated disk (6) is attached,
in particular welded, to a static holding body (4) on which the valve seat (10) is formed; **characterized in that** the valve arrangement (2) comprises a connecting flange (16) for the fluid-tight connection of the valve arrangement (2) to the exhaust line (22),
wherein the perforated disk (6) extends from the valve passage (14) to the connecting flange (16) and is designed such that, in the installed state, it seals off the connecting flange (16) in a fluid-tight manner with respect to the exhaust line (22).

2. Valve arrangement according to the preceding claim, wherein the perforated disk (6) is deformable.

3. Valve arrangement according to one of the preceding claims, wherein the perforated disk (6) has a wall thickness of less than 0.3 mm, in particular a wall thickness in the range from 0.1 mm to 0.3 mm.

4. Valve arrangement according to one of the preceding claims, wherein the perforated disk (6) is formed from a metallic material.

5. Valve arrangement according to one of the preceding claims, wherein the perforated disk (6) has at least one constriction (18).

6. Valve arrangement according to one of the preceding claims, wherein the perforated disk (6) has, in a region which in the installed state is situated between the perforated disk (6) and the connecting flange (16), at least one bead (20) which in the installed state produces a fluid-tight connection between the connecting flange (16) and the exhaust line (22).

7. Valve arrangement according to one of the preceding claims, also having a housing (24) which at least partially surrounds the valve seat (10) and the closing body (12) and is fixedly connected to the valve seat (10), wherein the connecting flange (16) is fastened via a preferably U-shaped spring washer (26) to the housing (24) in such a way that the valve arrangement (2), in the installed state, is fixed axially on the exhaust line (22).

8. Valve arrangement according to one of the preceding claims, also having at least one web (28) which runs in the axial direction and which connects the connecting flange (16) and the spring washer (26).

9. Valve arrangement according to one of the preceding claims, wherein the web (28) and/or the spring washer (26) are elastic in order to prevent impulse transmission from the valve to the exhaust line (22).

## Revendications

1. Ensemble soupape (2) destiné au dosage d'un milieu fluide dans une ligne d'échappement (22) d'un moteur à combustion interne, comprenant :
un siège de soupape (10) coopérant avec un corps de fermeture (12), dans lequel est réalisé un passage de soupape (14) ;
un disque perforé (6) disposé en aval du siège de soupape (10) et fermant le passage de soupape (14), lequel présente, dans la région du passage de soupape (14), au moins un trou axial (8), à travers lequel le milieu fluide peut être injecté dans la ligne d'échappement (22), le disque perforé (6) étant monté, en particulier étant soudé, sur un corps de retenue stationnaire (4) sur lequel est réalisé le siège de soupape (10) ;
**caractérisé en ce que** l'ensemble soupape (2) comprend une bride de raccordement (16) pour le raccordement étanche aux fluides de l'ensemble soupape (2) à la ligne d'échappement (22),
le disque perforé (6) s'étendant depuis le passage de soupape (14) jusqu'à la bride de de raccordement (16) et étant réalisé de telle sorte que, dans l'état installé, il étanchéifie la bride de raccordement (16) de manière étanche aux fluides par rapport à la ligne d'échappement (22).

2. Ensemble soupape selon la revendication précédente, dans lequel le disque perforé (6) est déformable.

3. Ensemble soupape selon l'une quelconque des revendications précédentes, dans lequel le disque perforé (6) présente une épaisseur de paroi inférieure à 0,3 mm, en particulier une épaisseur de paroi de l'ordre de 0,1 mm à 0,3 mm.

4. Ensemble soupape selon l'une quelconque des revendications précédentes, dans lequel le disque perforé (6) est réalisé en un matériau métallique.

5. Ensemble soupape selon l'une quelconque des revendications précédentes, dans lequel le disque perforé (6) présente au moins un rétrécissement (18).

6. Ensemble soupape selon l'une quelconque des revendications précédentes, dans lequel le disque perforé (6) présente, dans une région située dans l'état installé entre le disque perforé (6) et la bride de raccordement (16), au moins une moulure (20) qui, dans l'état installé, établit une liaison étanche aux fluides entre la bride de raccordement (16) et la ligne d'échappement (22).

7. Ensemble soupape selon l'une quelconque des revendications précédentes, présentant en outre un boîtier (24) qui entoure au moins en partie le siège de soupape (10) et le corps de fermeture (12) et qui est connecté fixement au siège de soupape (10), la bride de raccordement (16) étant fixée au boîtier (24) par le biais d'une rondelle élastique (26), de préférence en forme de U, de telle sorte que l'ensemble soupape (2), dans l'état installé, soit fixé axialement à la ligne d'échappement (22).

8. Ensemble soupape selon l'une quelconque des revendications précédentes, présentant en outre au moins une nervure (28) s'étendant dans la direction axiale, laquelle relie la bride de raccordement (16) et la rondelle élastique (26).

9. Ensemble soupape selon l'une quelconque des revendications précédentes, dans lequel la nervure (28) et/ou la rondelle élastique (26) sont élastiques, afin d'empêcher que les impulsions ne soient transmises de la soupape à la ligne d'échappement (22).
